# EUROPEAN PATENT SPECIFICATION

(11) **EP 3 712 383 B1**
(45) Date of publication and mention of the grant of the patent: **01.10.2025**
(21) Application number: 20163543.0
(22) Date of filing: 17.03.2020
(51) Int. Cl.: F01D 11/00, F01D 11/08, F01D 25/24

(54) **CMC BLADE OUTER AIR SEAL**
ÄUSSERE SCHAUFELLUFTDICHTUNG AUS KERAMIKMATRIX-FASERVERBUNDWERKSTOFF
JOINT D'AIR EXTÉRIEUR D'AUBE EN CMC

(30) Priority: 18.03.2019 US 201916356097
(43) Date of publication of application: 23.09.2020
(73) Proprietor: RTX Corporation, Farmington, CT 06032 (US)
(72) Inventor: BARKER, William M., North Andover, MA Massachusetts 01845 (US); CLARK, Thomas E., Sanford, ME Maine 04073 (US); McGARRAH, Craig R., Southington, CT Connecticut 06489 (US); WHITNEY, Daniel J., East Waterboro, ME Maine 04030 (US)
(74) Representative: Dehns

(56) References cited:
- EP-A1- 3 447 252
- EP-A1- 3 575 558
- WO-A1-2014/186099
- WO-A1-2015/088869
- WO-A1-2015/191186
- US-A1- 2007 031 258
- US-A1- 2012 171 027
- US-A1- 2013 156 556

## Description

### BACKGROUND

This invention relates to a ceramic matrix composite blade outer air seal, in particular to a blade outer air seal segment and to a turbine section for a gas turbine engine comprising such blade outer air seal segments.

Gas turbine engines are known and typically include a compressor compressing air and delivering it into a combustor. The air is mixed with fuel in the combustor and ignited. Products of the combustion pass downstream over turbine rotors, driving them to rotate.

It is desirable to ensure that the bulk of the products of combustion pass over turbine blades on the turbine rotor. As such, it is known to provide blade outer air seals radially outwardly of the blades. Blade outer air seals have been proposed made of ceramic matrix composite fiber layers.

US 2013/156556 A1 describes a shroud segment for a gas turbine engine constructed from a composite material including reinforcing fibres embedded in a matrix. The shroud segment has a hollow cross-sectional shape defined by opposed inner and outer walls, and forward and aft walls. Radiused, sharp, or square-edged transitions may be used at the intersections of the walls. A shroud cavity is defined within the walls. A transition wall extends at an angle between the forward wall and the outer wall, and lies at an acute angle to a central longitudinal axis of the engine when viewed in cross-section.

WO 2015/088869 A1 describes a shroud and shroud hanger wherein the shroud is formed of ceramic matrix composite material.

US 2007/031258 A1 describes an apparatus for mounting a refractory component such as a turbine shroud ring segment with a ceramic core onto a combustion turbine engine structure.

US 2012/171027 A1 describes a turbine shroud apparatus for a gas turbine engine having a central axis.

WO 2014/186099 A1 describes a shroud support system with load spreading comprising a shroud hanger and a ceramic matrix composite shroud segment.

WO 2015/191186 A1 describes a shroud hanger assembly for hangers and shrouds defining dimensionally incompatible components such as those which are press or frictionally fit to engage one another.

EP 3 575 558 A1, which was published on 4 December 2019 and so cannot be taken into account when considering the inventive step of the claims of the present application, describes a seal assembly for a gas turbine engine including a support mountable to an engine static structure.

EP 3447252 A1 describes a blade outer air seal (BOAS) includes a tube of a ceramic matrix composite material. A preform within the tube defines a mount for the BOAS.

### SUMMARY

From a first aspect of the invention, there is provided a blade outer air seal segment as recited in claim 1.

In a further embodiment of the above, the first and second circumferential edges are circumferentially inward of the first and second circumferential sides of the base portion.

In a further embodiment of any of the above, the first angle is less than about 20°.

In a further embodiment of any of the above, the second angle is smaller than the first angle.

In a further embodiment of any of the above, the base portion extends axially beyond the first wall.

In a further embodiment of any of the above, a slot extends through the outer wall.

In a further embodiment of any of the above, the first and second circumferential edges of the outer wall form mating surfaces configured to engage a support structure or carrier.

In a further embodiment of any of the above, the first wall, the second wall, and the outer wall have a same thickness.

In a further embodiment of any of the above, a film cooling hole extends through the base portion.

In a further embodiment of any of the above, the film cooling hole is between the first and second walls.

In a further embodiment of any of the above, the blade outer air seal is a ceramic matrix composite material.

From a further aspect of the invention, there is provided a turbine section for a gas turbine engine as recited in claim 10.

In a further embodiment of any of the above, the first and second edges of the outer wall are engaged with the carrier.

In a further embodiment of any of the above, a wear liner is arranged within each segment. The wear liner has a radially extending tab engaged with the first portion.

In a further embodiment of any of the above, the second angle is smaller than the first angle.

In a further embodiment of any of the above, the blade outer air seal is a ceramic matrix composite material.

These and other features may be best understood from the following drawings and specification.

### BRIEF DESCRIPTION OF THE DRAWINGS

Figure 1 schematically shows a gas turbine engine.
Figure 2 shows an example turbine section.
Figure 3 shows a portion of an exemplary blade outer air seal assembly.
Figure 4 shows a cross section of the exemplary blade outer air seal assembly.
Figure 5 shows an exemplary blade outer air seal.
Figure 6 shows a side view of the exemplary blade outer air seal of Figure 5.
Figure 7 shows another embodiment of a blade outer air seal.
Figure 8 shows a blade outer air seal assembly.

### DETAILED DESCRIPTION

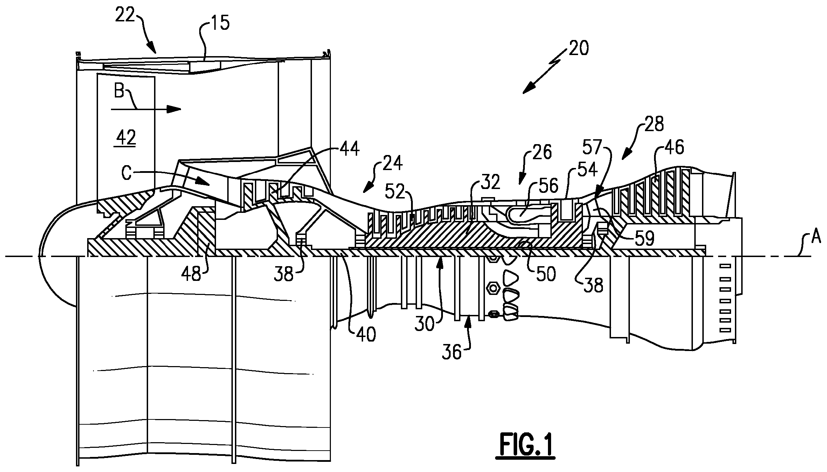

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine engine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}*.* The "Low corrected fan tip speed" as disclosed herein according to one non-limiting embodiment is less than about 1150 ft / second (350.5 meters/second).

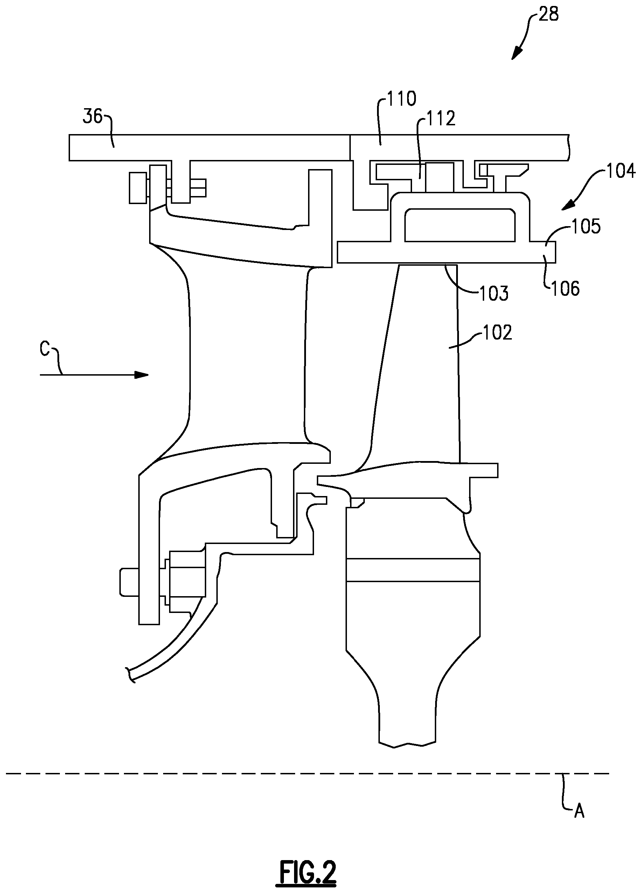

Figure 2 shows a portion of an example turbine section 28, which may be incorporated into a gas turbine engine such as the one shown in Figure 1. However, it should be understood that other sections of the gas turbine engine 20 or other gas turbine engines, and even gas turbine engines not having a fan section at all, could benefit from this invention.

A turbine blade 102 has a radially outer tip 103 that is spaced from a blade outer air seal assembly 104 with a blade outer air seal ("BOAS") 106. The BOAS 106 is made up of a plurality of seal segments 105 that are circumferentially arranged in an annulus about the central axis A of the engine 20. The BOAS segments 105 may be monolithic bodies that are formed of a high thermal-resistance, low-toughness material, such as a ceramic matrix composite ("CMC"). The BOAS segments 105 are mounted to a BOAS support structure 110 via an intermediate carrier 112. The support structure 110 may be mounted to an engine structure, such as engine static structure 36. In some examples, the support structure 110 is integrated with engine static structure 36.

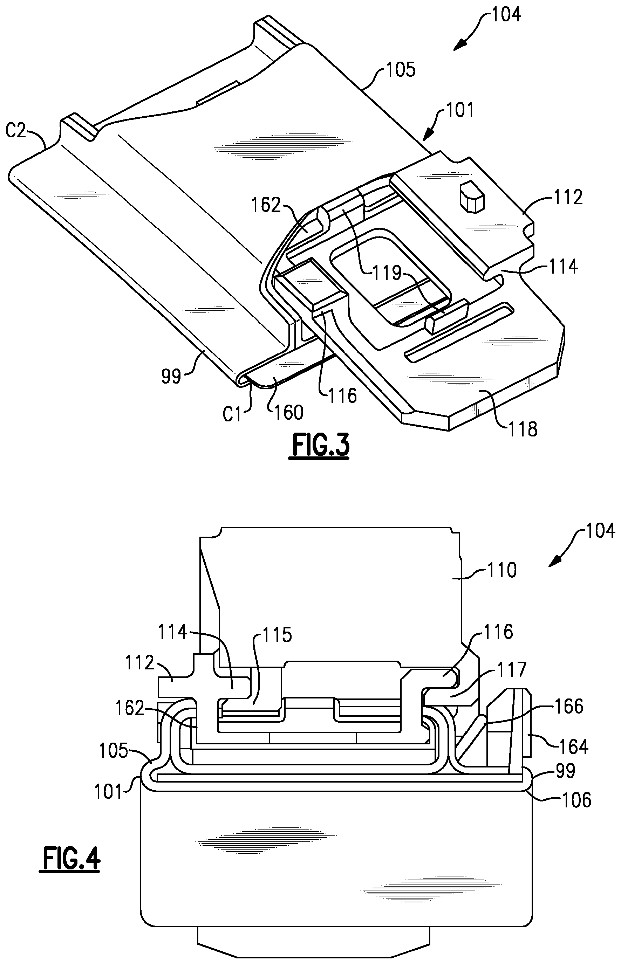

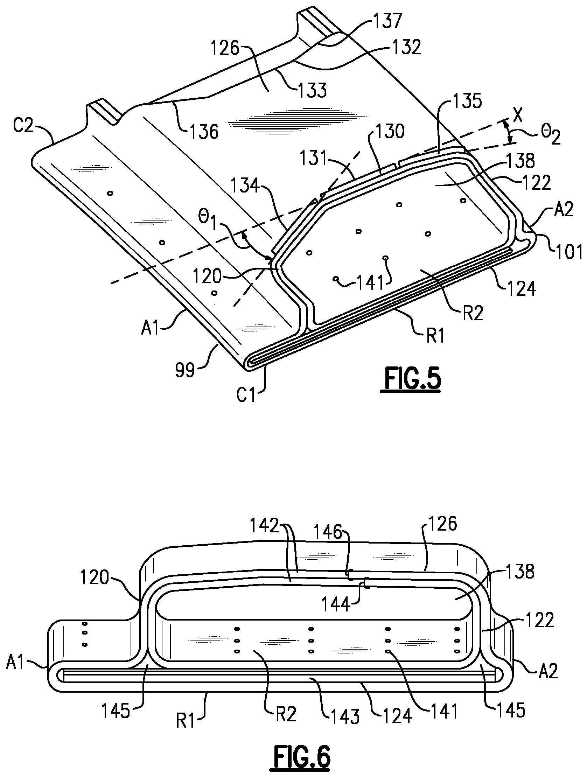

Figure 3 shows a portion of an example BOAS assembly 104. The assembly 104 has a seal segment 105 with a carrier 112. The carrier 112 may be segmented, with each segment arranged between adjacent seal segments 105. The carrier 112 has a base portion 118 that is configured to engage with the seal segment 105. In this example, an end of the base portion 118 fits within a passage 138 (shown in Figure 5) of the seal segment 105. The carrier 112 has first and second hooks 114, 116 that extend radially outward from the base portion 118 for attaching the carrier 112 and seal segment 105 to the support structure 110. The carrier 112 may have posts 119 that engage with an edge of the seal segment 105, and help prevent rotation of the seal segment 105 relative to the carrier 112.

A wear liner 162 may be arranged between the seal segment 105 and the carrier 112 in some examples. A feather seal 160 may be used for sealing between circumferential ends C1, C2 of adjacent seal segments 105. The feather seal 160 may extend along the axial length of the BOAS segment 105.

Figure 4 shows the BOAS assembly 104 with the support structure 110. The support structure 110 has first and second hooks 115, 117 that extend radially inward and are configured to engage with the first and second hooks 114, 116 of the carrier 112. In the illustrated embodiment, the hooks 114, 116 of the carrier 112 extend generally axially forward towards the leading edge 99, while the hooks 115, 117 extend generally axially backwards towards the trailing edge 101. However, the hooks 114, 116, 115, 117 may have different orientations, such as extending in the opposite direction, so long as the hooks 114, 116 of the carrier engage with the hooks 115, 117 of the support structure 110.

The assembly 104 may include a front brush seal 164 and a dogbone or diamond seal 166 in some examples. These seals 164, 166 are engaged with the leading edge 99 of the BOAS segments 105, and help maintain the axial position of the BOAS 106. The seal 166 pushes the brush seal 164 axially forward and the BOAS segments 105 axially aft.

Figure 5 illustrates an exemplary BOAS segment 105. The seal segment 105 is a body that defines radially inner and outer sides R1, R2, respectively, first and second axial sides A1, A2, respectively, and first and second circumferential sides C1, C2, respectively. The radially inner side R1 faces in a direction toward the engine central axis A. The radially inner side R1 is thus the gas path side of the seal segment 105 that bounds a portion of the core flow path C. The first axial side A1 faces in a forward direction toward the front of the engine 20 (i.e., toward the fan 42), and the second axial side A2 faces in an aft direction toward the rear of the engine 20 (i.e., toward the exhaust end). That is, the first axial side A1 corresponds to a leading edge 99, and the second axial side A2 corresponds to a trailing edge 101.

In the illustrated example, the BOAS segment 105 includes a first axial wall 120 and a second axial wall 122 that extend radially outward from a base portion 124. The first and second axial walls 120, 122 are axially spaced from one another. Each of the first and second axial walls 120, 122 extends along the base portion 124 in a generally circumferential direction along at least a portion of the seal segment 105. The base portion 124 extends between the leading edge 99 and the trailing edge 101 and defines a gas path on a radially inner side and a non-gas path on a radially outer side. An outer wall 126 extends between the first and second axial walls 120, 122. The outer wall 126 includes a generally constant thickness and constant position in the radial direction. The base portion 124, first and second axial walls 120, 122, and the outer wall 126 form a passage 138 that extends in a generally circumferential direction. In this disclosure, forward, aft, upstream, downstream, axial, radial, or circumferential is in relation to the engine axis A unless stated otherwise. The base portion 124 may extend axially forward and aft of the first and second walls 120, 122, and provides a flat surface for sealing of the BOAS leading and trailing edges 99, 101. For example, the base portion 124 includes a portion axially forward of the first axial wall 120 for engagement with seals 164, 166 (shown in Figure 4).

The outer wall 126 has first and second edges 130, 132. The edges 130, 132 have tapered portions. A first portion 131, 133 of the edges 130, 132, respectively, extends generally in the axial direction X. The first portions 131, 133 provide a flat face for engagement with the carrier 112, and help prevent rotation of the seal segment 105 relative to the carrier 112. Tapered portions upstream and downstream of the first portion 131, 133 are angled relative to the axial direction X. A second portion 134, 136 of the edges 130, 132, respectively, is upstream of the first portions 131, 133. The second portions 134, 136 are arranged at a first angle Θ₁ with respect to the first portions 131, 133. A third portion 135, 137 of the edges 130, 132, respectively, is downstream of the first portions 131, 133. The third portions 135, 137 are arranged at a second angle Θ₂ with respect to the first portions 131, 133. The second and third portions 134, 136, 135, 137 provide tapered faces, which may reduce stresses on the seal segment 105. The first and second angles Θ₁, Θ₂ are less than about 45° with respect to the axial direction X. In another embodiment, the first and second angles Θ₁, Θ₂ are less than about 20° with respect to the axial direction X. The first angle Θ₁ may be greater than the second angle Θ₂. In one example, the first angle Θ₁ is about 20° and the second angle Θ₂ is about 10°.

In the illustrated embodiment, the first portion 131, 133 is generally centered on the outer wall 126. However, in other embodiments, the first portion 131, 133 may be moved axially forward or aft, depending on the carrier 112 and wear liner 162 to address varying torque loads. In one example embodiment, the first portion 131, 133 has a length in the axial direction of about 0.30 inches (7.62 mm). The axial length of the first portion 131, 133 provides a surface for mating with the carrier 112.

Figure 6 shows a side view of the BOAS segment 105. The seal segment 105 may be formed of a ceramic matrix composite ("CMC") material. Each seal segment 105 is formed of a plurality of CMC laminate plies 142. The laminate plies 142 may be silicon carbide fibers, formed into a braided or woven fabric in each layer. The fibers may be coated by a boron nitride. In other examples, the BOAS segment 105 may be made of a monolithic ceramic. CMC components such as BOAS segments 105 are formed by laying fiber material, such as laminate sheets, in tooling, injecting a liquid resin into the tooling, and curing to form a solid composite component. The component may be densified by adding additional material to further stiffen the laminates.

Densification includes injecting material, such as a silicon carbide matrix material, into spaces between the fibers in the laminate plies. This may be utilized to provide 100% of the desired densification, or only some percentage. One hundred percent densification may be defined as the layers being completely saturated with the matrix and about the fibers. One hundred percent densification may be defined as the theoretical upper limit of layers being completely saturated with the matrix and about the fibers, such that no additional material may be deposited. In practice, 100% densification may be difficult to achieve. Although a CMC loop BOAS segment 105 is shown, other BOAS arrangements may be utilized within the scope of this disclosure

In an embodiment, the BOAS segment 105 is formed from two loops of CMC laminated plies. A first loop 144 comprises the inner-most layers relative to the respective passage 138. A second loop 146 is formed about the first loop 144 to form the outermost layers relative to the passage 138. In one example embodiment, the first and second loops 144, 146 are each formed from four laminated plies 142. A noodle region 145 may be formed between the first and second loops 144, 146. The noodle region 145 may be filled with a matrix material during densification, in some examples. In some examples, the base portion 124 may have additional reinforcement plies 143. The reinforcement plies 143 may reduce the size of the noodle regions 145, which strengthens the overall structure.

The transverse direction of the plies 142 helps evenly distribute stresses on the component. The shape of the seal segment 105 and the passage 138 allows for complex cooling arrangement and relatively low thermal stresses. The seal segment 105 also allows for multiple sealing surfaces and may accommodate different designs for the intermediate carrier 112. The loop construction of the seal segment 105 also minimizes delamination when the seal segment 105 is secured to the support structure 110 via the carrier 112.

In an example embodiment, the first wall 120, second wall 122, and outer wall 126 have a constant wall thickness of about 8 laminated plies 142, with each plie 142 having a thickness of about 0.011 inches (0.279 mm). This structure may reduce thermal gradient stress. Although 8 laminated plies are described, BOAS constructed of more or fewer plies may fall within the scope of this disclosure. In one example, the first and second loops 144, 146 are formed from laminates wrapped around a core mandrel. In some embodiments, after the laminate plies 142 are formed into a seal segment 105, additional features, such as edges 130, 132 are machined in to form mating surfaces and/or cooling holes. The seal segment 105 may be ultrasonically machined, for example.

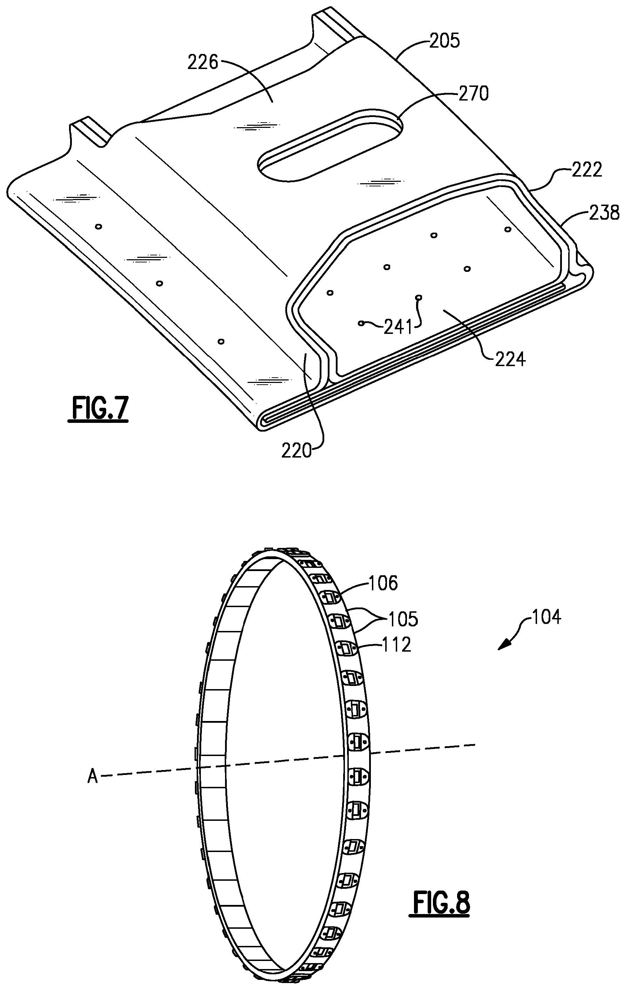

Figure 7 shows another example seal segment 205. In this example, a hole 270 extends through the outer wall 226. The hole 270 may be centered circumferentially on the seal segment 205. In the illustrated example, the hole 270 is an elongated slot shape, however, other hole shapes may be used. The hole 270 allows cooling air to pass through the outer wall 226 into the passage 238 and through cooling holes 241. The hole 270 may also provide weight reduction and may reduce stresses on the seal segment 205.

Figure 8 shows a BOAS assembly 104. The assembly 104 includes a plurality of seal segments 105 and a plurality of carrier segments 112 arranged in an annulus about the engine axis A. There are an equal number of carrier segments 112 as seal segments 105. In the illustrated example, there are 40 seal segments and 40 carrier segments. However, more or fewer segments may be used.

The disclosed BOAS arrangement reduces stress on the seal segment 105 by providing edges 130, 132 to engage with the carrier 112. The edges 130, 132 have a flat portion 131, 133 to prevent rotation. The tapered portions 134, 135, 136, 137 of the edges 130, 132 reduce stresses on the seal segment 105. The edges 130, 132 also permit tooling access for machining cooling holes 141 into the base portion 124. The disclosed seal segment 105 permits cost effective manufacturing and assembly and allows the use of a ceramic BOAS. The ability to use a ceramic BOAS promotes a more stable assembly because ceramic materials are not as ductile as metallic materials. The disclosed CMC BOAS has simple features that are easily manufactured using CMC laminates.

In this disclosure, "generally axially" means a direction having a vector component in the axial direction that is greater than a vector component in the circumferential direction, "generally radially" means a direction having a vector component in the radial direction that is greater than a vector component in the axial direction and "generally circumferentially" means a direction having a vector component in the circumferential direction that is greater than a vector component in the axial direction.

Although an embodiment of this invention has been disclosed, a worker of ordinary skill in this art would recognize that certain modifications would come within the scope of the claims.

## Claims

1. A blade outer air seal segment (105), comprising:
a base portion (124) extending between a first circumferential side (C1) and a second circumferential side (C2) and from a first axial side (A1) to a second axial side (A2);
a first wall (120) axially spaced from a second wall (122), the first and second walls (120, 122) extending from the base portion (124); and
an outer wall (126) joining the first and second walls (120, 122),
wherein the base portion (124), first and second axial walls (120, 122), and the outer wall (126) form a passage (138) that extends in a generally circumferential direction,
wherein the outer wall (126) has a first circumferential edge (130) and a second circumferential edge (132), each of the circumferential edges (130, 132) having a first portion (131, 133), extending in a generally axial direction (X), a second portion (134, 136), and a third portion (135, 137), wherein the second portion (134, 136) is arranged at a first angle (Θ₁) relative to the first portion (131, 133) and the axial direction (X),
wherein the second portion (134, 136) is arranged axially forward of the first portion (131, 133), and the third portion (135, 137) is arranged axially aft of the first portion (131, 133), and wherein the third portion (135, 137) is arranged at a second angle (Θ₂) relative to the first portion (131, 133) and the axial direction (X), and
wherein the first and second angles (Θ1, Θ2) are less than 45° with respect to the axial direction (X).

2. The blade outer air seal segment (105) of claim 1, wherein the first and second circumferential edges (130, 132) are circumferentially inward of the first and second circumferential sides (C1, C2) of the base portion (124).

3. The blade outer air seal segment (105) of any preceding claim, wherein the first angle (Θ₁) is less than about 20°.

4. The blade outer air seal segment (105) of any preceding claim, wherein the base portion (124) extends axially beyond the first wall (120).

5. The blade outer air seal segment (105) of any preceding claim, wherein a slot extends through the outer wall (126).

6. The blade outer air seal segment (105) of any preceding claim, wherein the first and second circumferential edges (130, 132) of the outer wall (126) form mating surfaces configured to engage a support structure or carrier.

7. The blade outer air seal segment (105) of any preceding claim, wherein the first wall (120), the second wall (122), and the outer wall (126) have a same thickness.

8. The blade outer air seal segment (105) of any preceding claim, wherein a film cooling hole (141) extends through the base portion (124).

9. The blade outer air seal segment (105) of claim 8, wherein the film cooling hole (141) is between the first and second walls (120, 122).

10. A turbine section for a gas turbine engine, comprising:
a turbine blade extending radially outwardly to a radially outer tip and for rotation about an axis of rotation;
a blade outer air seal having a plurality of blade outer air seal segments (105) as recited in claim 1 or 2 and mounted in a support structure via a carrier, the plurality of segments (105) arranged circumferentially about the axis of rotation and radially outward of the outer tip.

11. The turbine section of claim 10, wherein the first and second circumferential edges (130, 132) of the outer wall (126) are engaged with the carrier.

12. The turbine section of claim 10 or 11, wherein a wear liner is arranged within each segment (105), the wear liner having a radially extending tab engaged with the first portion (131, 133).

13. The blade outer air seal segment (105) of any of claims 1 to 9 or the turbine section of claim 10, 11 or 12, wherein, the second angle (Θ₂) is smaller than the first angle (Θ₁).

14. The blade outer air seal segment (105) of any of claims 1 to 9 or the turbine section of any of claims 10 to 13 wherein the blade outer air seal (106) is a ceramic matrix composite material.

## Patentansprüche

1. Äußeres Schaufelluftdichtungssegment (105), umfassend:
einen Basisabschnitt (124), der sich zwischen einer ersten Umfangsseite (C1) und einer zweiten Umfangsseite (C2) und von einer ersten axialen Seite (A1) zu einer zweiten axialen Seite (A2) erstreckt;
eine erste Wand (120), axial von einer zweiten Wand (122) beabstandet, wobei die erste und zweite Wand (120, 122) sich vom Basisabschnitt (124) erstrecken; und
eine Außenwand (126), die die erste und zweite Wand (120, 122) verbindet,
wobei der Basisabschnitt (124), die erste und zweite axiale Wand (120, 122) und die Außenwand (126) einen Durchgang (138) bilden, der in einer im Allgemeinen Umfangsrichtung sich erstreckt,
wobei die Außenwand (126) eine erste Umfangskante (130) und eine zweite Umfangskante (132) aufweist, wobei jede der Umfangskanten (130, 132) einen ersten Abschnitt (131, 133), der sich in einer im Allgemeinen axialen Richtung (X) erstreckt, einen zweiten Abschnitt (134, 136) und einen dritten Abschnitt (135, 137) aufweist, wobei der zweite Abschnitt (134, 136) in einem ersten Winkel (θ₁) relativ zum ersten Abschnitt (131, 133) und der axialen Richtung (X) angeordnet ist,
wobei der zweite Abschnitt (134, 136) axial vor dem ersten Abschnitt (131, 133) angeordnet ist, und der dritte Abschnitt (135, 137) axial hinter dem ersten Abschnitt (131, 133) angeordnet ist und wobei der dritte Abschnitt (135, 137) in einem zweiten Winkel (θ₂) relativ zum ersten Abschnitt (131, 133) und der axialen Richtung (X) angeordnet ist und
wobei der erste und zweite Winkel (θ1, θ2) kleiner als 45° in Bezug auf die axiale Richtung (X) sind.

2. Äußeres Schaufelluftdichtungssegment (105) nach Anspruch 1, wobei die erste und zweite Umfangskante (130, 132) umfänglich innen zu der ersten und zweiten Umfangsseite (C1, C2) des Basisabschnitts (124) liegen.

3. Äußeres Schaufelluftdichtungssegment (105) nach einem der vorhergehenden Ansprüche, wobei der erste Winkel (θ₁) kleiner als etwa 20° ist.

4. Äußeres Schaufelluftdichtungssegment (105) nach einem der vorhergehenden Ansprüche, wobei der Basisabschnitt (124) axial über die erste Wand (120) hinaus sich erstreckt.

5. Äußeres Schaufelluftdichtungssegment (105) nach einem der vorhergehenden Ansprüche, wobei ein Schlitz durch die Außenwand (126) sich erstreckt.

6. Äußeres Schaufelluftdichtungssegment (105) nach einem der vorhergehenden Ansprüche, wobei die erste und zweite Umfangskante (130, 132) der Außenwand (126) Passflächen bilden, die konfiguriert sind, um eine Tragkonstruktion oder einen Träger in Eingriff zu nehmen.

7. Äußeres Schaufelluftdichtungssegment (105) nach einem der vorhergehenden Ansprüche, wobei die erste Wand (120), die zweite Wand (122) und die Außenwand (126) dieselbe Dicke aufweisen.

8. Äußeres Schaufelluftdichtungssegment (105) nach einem der vorhergehenden Ansprüche, wobei ein Filmkühlloch (141) durch den Basisabschnitt (124) sich erstreckt.

9. Äußeres Schaufelluftdichtungssegment (105) nach Anspruch 8, wobei sich das Filmkühlloch (141) zwischen der ersten und zweiten Wand (120, 122) befindet.

10. Turbinenabschnitt für ein Gasturbinentriebwerk, umfassend:
eine Turbinenschaufel, die sich radial nach außen zu einer radial äußeren Spitze erstreckt und zur Rotation um eine Rotationsachse dient;
eine äußere Schaufelluftdichtung, die eine Vielzahl von äußeren Schaufelluftdichtungssegmenten (105) nach Anspruch 1 oder 2 aufweist und in einer Tragkonstruktion über einen Träger montiert ist, wobei die Vielzahl der Segmente (105) umfänglich um die Rotationsachse und radial außen zur äußeren Spitze angeordnet ist.

11. Turbinenabschnitt nach Anspruch 10, wobei die erste und zweite Umfangskante (130, 132) der Außenwand (126) mit dem Träger in Eingriff stehen.

12. Turbinenabschnitt nach Anspruch 10 oder 11, wobei eine Verschleißauskleidung innerhalb jedes Segments (105) angeordnet ist, wobei die Verschleißauskleidung eine sich radial erstreckende Lasche aufweist, die mit dem ersten Abschnitt (131, 133) in Eingriff steht.

13. Äußeres Schaufelluftdichtungssegment (105) nach einem der Ansprüche 1 bis 9 oder Turbinenabschnitt nach Anspruch 10, 11 oder 12, wobei der zweite Winkel (θ₂) kleiner als der erste Winkel (θ₁) ist.

14. Äußeres Schaufelluftdichtungssegment (105) nach einem der Ansprüche 1 bis 9 oder Turbinenabschnitt nach einem der Ansprüche 10 bis 13, wobei die äußere Schaufelluftdichtung (106) ein Keramikmatrix-Verbundmaterial ist.

## Revendications

1. Segment de joint d'air extérieur d'aube (105), comprenant :
une partie base (124) s'étendant entre un premier côté circonférentiel (C1) et un second côté circonférentiel (C2) et d'un premier côté axial (A1) à un second côté axial (A2) ;
une première paroi (120) espacée axialement d'une seconde paroi (122), les première et seconde parois (120, 122) s'étendant à partir de la partie base (124) ; et
une paroi extérieure (126) reliant les première et seconde parois (120, 122),
dans lequel la partie base (124), les première et seconde parois axiales (120, 122) et la paroi extérieure (126) forment un passage (138) qui s'étend dans une direction généralement circonférentielle,
dans lequel la paroi extérieure (126) présente un premier bord circonférentiel (130) et un second bord circonférentiel (132), chacun des bords circonférentiels (130, 132) présentant une première partie (131, 133) s'étendant dans une direction généralement axiale (X), une deuxième partie (134, 136) et une troisième partie (135, 137), dans lequel la deuxième partie (134, 136) est agencée selon un premier angle (θ₁) par rapport à la première partie (131, 133) et à la direction axiale (X),
dans lequel la deuxième partie (134, 136) est agencée axialement vers l'avant de la première partie (131, 133), et la troisième partie (135, 137) est agencée axialement vers l'arrière de la première partie (131, 133), et dans lequel la troisième partie (135, 137) est agencée selon un second angle (θ₂) par rapport à la première partie (131, 133) et à la direction axiale (X), et
dans lequel les premier et second angles (θ1, θ2) sont inférieurs à 45° par rapport à la direction axiale (X).

2. Segment de joint d'air extérieur d'aube (105) selon la revendication 1, dans lequel les premier et second bords circonférentiels (130, 132) sont disposés circonférentiellement vers l'intérieur des premier et second côtés circonférentiels (C1, C2) de la partie base (124).

3. Segment de joint d'air extérieur d'aube (105) selon une quelconque revendication précédente, dans lequel le premier angle (θ₁) est inférieur à environ 20°.

4. Segment de joint d'air extérieur d'aube (105) selon une quelconque revendication précédente, dans lequel la partie base (124) s'étend axialement au delà de la première paroi (120).

5. Segment de joint d'air extérieur d'aube (105) selon une quelconque revendication précédente, dans lequel une fente s'étend à travers la paroi extérieure (126).

6. Segment de joint d'air extérieur d'aube (105) selon une quelconque revendication précédente, dans lequel les premier et second bords circonférentiels (130, 132) de la paroi extérieure (126) forment des surfaces d'accouplement configurées pour entrer en prise dans une structure de support ou un support.

7. Segment de joint d'air extérieur d'aube (105) selon une quelconque revendication précédente, dans lequel la première paroi (120), la seconde paroi (122) et la paroi extérieure (126) ont une même épaisseur.

8. Segment de joint d'air extérieur d'aube (105) selon une quelconque revendication précédente, dans lequel un trou de refroidissement de film (141) s'étend à travers la partie base (124).

9. Segment de joint d'air extérieur d'aube (105) selon la revendication 8, dans lequel le trou de refroidissement de film (141) se trouve entre les première et seconde parois (120, 122).

10. Section de turbine pour turbine à gaz, comprenant :
une aube de turbine s'étendant radialement vers l'extérieur jusqu'à une pointe radialement extérieure et destinée à tourner autour d'un axe de rotation ;
un joint d'air extérieur d'aube comportant une pluralité de segments de joint d'air extérieur d'aube (105) tels que décrits dans la revendication 1 ou 2 et montés dans une structure de support par l'intermédiaire d'un support, la pluralité de segments (105) étant agencés circonférentiellement autour de l'axe de rotation et radialement vers l'extérieur de la pointe extérieure.

11. Section de turbine selon la revendication 10, dans laquelle les premier et second bords circonférentiels (130, 132) de la paroi extérieure (126) sont en prise avec le support.

12. Section de turbine selon la revendication 10 ou 11, dans laquelle un revêtement d'usure est agencé à l'intérieur de chaque segment (105), le revêtement d'usure comportant une languette s'étendant radialement en prise avec la première partie (131, 133).

13. Segment de joint d'air extérieur d'aube (105) selon l'une quelconque des revendications 1 à 9 ou section de turbine selon la revendication 10, 11 ou 12, dans lequel ou dans laquelle le second angle (θ₂) est inférieur au premier angle (θ₁).

14. Segment de joint d'air extérieur d'aube (105) selon l'une quelconque des revendications 1 à 9 ou section de turbine selon l'une quelconque des revendications 10 à 13, dans lequel ou dans laquelle le joint d'air extérieur d'aube (106) est un matériau composite à matrice céramique.
